# FASCICULE DE BREVET EUROPEEN

(11) **EP 2 171 218 B1**
(45) Date de publication et mention de la délivrance du brevet: **12.10.2016**
(21) Numéro de dépôt: 08805597.5
(22) Date de dépôt: 22.05.2008
(51) Int. Cl.: F01D 17/10, F01D 25/26, F02C 9/52, F02K 1/38, F02K 3/075, F02K 1/46, F02K 3/06

(54) **TURBOMOTEUR A DOUBLE FLUX ET TUYERE DE FLUX CHAUD PERFECTIONNEE**
MANTELSTROMTRIEBWERK UND VERBESSERTE AUSLASSDÜSE DAFÜR
DUAL FLOW TURBOSHAFT ENGINE WITH ADVANCED HOT FLOW NOZZLE

(30) Priorité: 31.05.2007 FR 0703861
(43) Date de publication de la demande: 07.04.2010
(73) Titulaire: AIRBUS OPERATIONS (SAS), 31060 Toulouse (FR)
(72) Inventeur: CROSTA, Franck, F-31490 Leguevin (FR); PRAT, Damien, F-31770 Colomiers (FR)
(74) Mandataire: Gevers & Orès
(86) Numéro de dépôt international: PCT/FR2008/000706
(87) Numéro de publication internationale: WO 2009/004143

(56) Documents cités:
- EP-A- 1 004 759
- FR-A- 2 892 152

## Description

La présente invention concerne des perfectionnements aux turbomoteurs pour aéronefs.

Plus spécifiquement, la présente invention se rapporte aux turbomoteurs à double flux comportant :
- une nacelle délimitant, à l'avant, une entrée d'air et contenant axialement une soufflante de flux froid et un générateur de flux chaud pourvu d'une turbine enfermée dans un carter se terminant, à l'arrière, par un corps central en forme de bulbe raccordé audit carter de turbine le long d'une première surface de raccord ;
- un capot moteur enfermant ledit générateur de flux chaud et comportant :
   • une paroi externe délimitant avec ladite nacelle un canal de flux froid se terminant, à l'arrière, par une tuyère de flux froid, et
   • une paroi interne délimitant avec ledit carter de turbine un canal de flux chaud ;
- une tuyère de flux chaud prolongeant ledit capot moteur vers l'arrière en étant raccordée à celui-ci le long d'une seconde surface de raccord et coopérant avec ledit corps central pour délimiter une section de col de tuyère et une section de sortie nominales pour ledit flux chaud ; et
- au moins une ouverture de ventilation disposée entre ladite paroi externe dudit capot moteur et ladite tuyère de flux chaud, à l'extérieur par rapport à ladite tuyère de flux froid, et destinée à évacuer à l'extérieur un flux d'air de ventilation prélevé sur ledit flux froid et introduit dans ledit capot moteur pour réguler la température dudit générateur de flux chaud.

Dans les turbomoteurs de ce type, ladite tuyère de flux chaud est donc soumise au flux froid du côté externe et au flux chaud du côté interne, et elle comporte une peau externe optimisée pour l'écoulement du flux froid et une peau interne optimisée pour l'écoulement du flux chaud.

Une telle structure à double peau est donc relativement lourde et, de plus, du fait de la différence importante des températures entre le flux chaud et le flux froid, elle se comporte comme un bilame et subit des déformations nuisant à l'optimisation des écoulements des flux froid et chaud en vol, notamment en croisière.

Le document EP 1 004 759 décrit un turboréacteur possédant une une tuyère de feux chaud refroidi par une partie de flux provenant du flux froid,. La tuyère de flux chaud comprend deux peaux entre lesquelles circule ladite partie de faux provenant du flux froid.

Le document FR 2 892 1 52 propose un turboréacteur qui possède également une tuyère de flux chaud possédant une double peau entre lesquelles circule une partie de flux provenant d'un flux froid.

La présente invention a pour objet de remédier à ces inconvénients.

A cette fin, selon l'invention, un turbomoteur du type rappelé ci-dessus est remarquable en ce que :
- ladite tuyère de flux chaud est constituée d'une peau unique.

La présente invention est basée sur les constatations :
- que la majeure partie du temps d'utilisation d'un turbomoteur d'aéronef correspond au vol de croisière et qu'il est donc avantageux d'optimiser la partie arrière d'un tel turbomoteur pour le vol de croisière ;
- qu'en vol de croisière l'écoulement du flux froid d'un tel turbomoteur est supersonique, alors que l'écoulement du flux chaud est subsonique ; et
- que l'optimisation de l'écoulement du flux froid supersonique est plus critique que l'optimisation de l'écoulement du flux chaud subsonique, et que l'on peut prendre presque exclusivement en compte l'optimisation de l'écoulement dudit flux froid à la condition que les sections nominales de col de tuyère et de sortie soient respectées pour ledit flux chaud.

Ainsi, selon la présente invention, on met à profit ces constatations pour réaliser la tuyère de flux chaud sous la forme d'une simple peau, ce qui, par rapport à une réalisation à double peau, permet de bénéficier d'un gain de masse et d'éviter les déformations par effet bilame.

Selon l'invention, ladite peau unique présente la forme d'un bulbe s'élargissant depuis ladite seconde surface de raccord jusqu'à venir en prolongement de ladite paroi externe dudit capot moteur.

Bien entendu, la position de ladite ouverture de ventilation, entre le bord arrière de la paroi externe du capot moteur et ladite partie de ladite peau unique en prolongement de cette paroi externe, dépend de la conformation de ladite peau unique.

Selon l'invention, ladite peau unique coopère avec ledit corps central pour délimiter ladite section nominale de col de tuyère et ladite section de sortie nominale pour ledit flux chaud.

Selon l'invention, ladite ouverture de ventilation est ménagée au voisinage de la partie de plus grand diamètre de ladite peau unique.

De façon évidente, la mise en oeuvre de la présente invention est particulièrement aisée dans les turbomoteurs dans lesquels ledit col de tuyère du flux chaud est confondu avec ladite sortie du flux chaud, puisqu'alors une seule section nominale est à respecter.

L'invention concerne également une tuyère de flux chaud pour un turbomoteur à double flux pour aéronef, pourvu d'un axe longitudinal (L-L) et comportant :
- une nacelle délimitant, à l'avant, une entrée d'air et contenant axialement une soufflante de flux froid et un générateur de flux chaud pourvu d'une turbine enfermée dans un carter se terminant, à l'arrière, par un corps central en forme de bulbe raccordé audit carter de turbine le long d'une première surface de raccord ;
- un capot moteur enfermant ledit générateur de flux chaud et comportant :
   ∘ une paroi externe délimitant avec ladite nacelle un canal de flux froid se terminant, à l'arrière, par une tuyère de flux froid, et
   ∘ une paroi interne délimitant avec ledit carter de turbine un canal de flux chaud,
- ladite tuyère de flux chaud prolongeant ledit capot moteur vers l'arrière en étant raccordée à celui-ci le long d'une seconde surface de raccord et coopérant avec ledit corps central pour délimiter une section de col de tuyère et une section de sortie nominales pour ledit flux chaud ; et
- au moins une ouverture de ventilation disposée entre ladite paroi externe dudit capot moteur et ladite tuyère de flux chaud, à l'extérieur par rapport à ladite tuyère de flux froid, et destinée à évacuer à l'extérieur un flux d'air de ventilation prélevé sur ledit flux froid et introduit dans ledit capot moteur pour réguler la température dudit générateur de flux chaud,

Selon l'invention :
- ladite tuyère de flux chaud est constituée d'une peau unique présentant la forme au moins approximative d'un bulbe s'élargissant depuis ladite seconde surface de raccord jusqu'à venir en prolongement de ladite paroi externe dudit capot moteur ;
- ladite peau unique coopère avec ledit corps central pour délimiter ladite section nominale de col de tuyère et ladite section de sortie nominale pour ledit flux chaud ; et
- ladite ouverture de ventilation est ménagée au voisinage de la partie de plus grand diamètre de ladite peau unique.

Les figures du dessin annexé feront bien comprendre comment l'invention peut être réalisée. Sur ces figures, des références identiques désignent des éléments semblables.

La figure 1 est une vue schématique avec arrachement, partiellement en coupe axiale, d'un turbomoteur concerné par la présente invention.

La figure 2 montre, en coupe axiale agrandie et partielle, une configuration connue pour la partie arrière du canal de flux chaud du turbomoteur de la figure 1.

La figure 3 montre, en vue comparable à celle de la figure 2, un exemple de configuration conforme à la présente invention, pour la partie arrière dudit canal de flux chaud du turbomoteur de la figure 1.

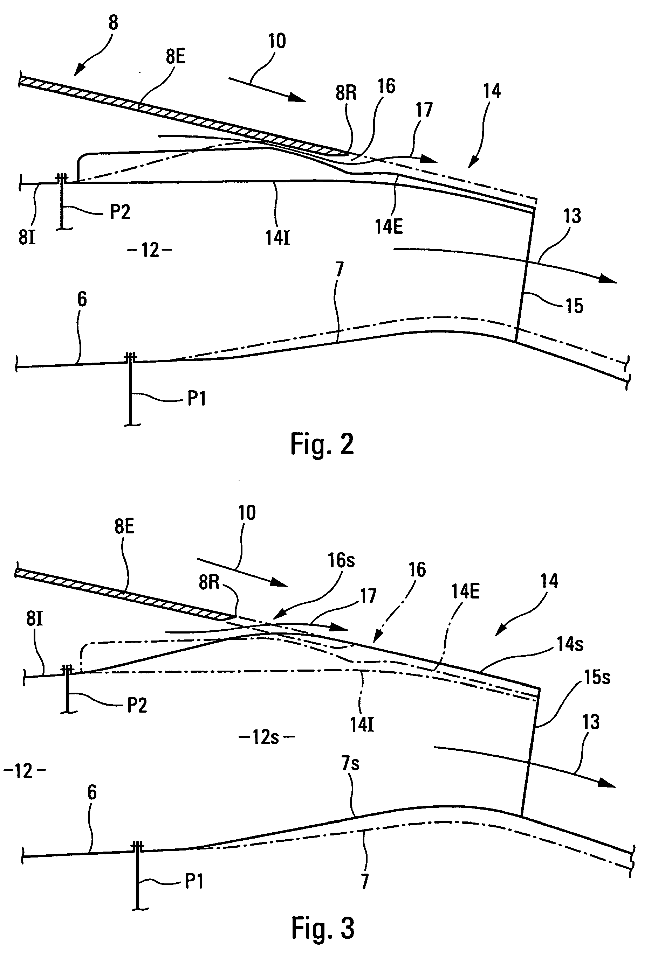

Sur la figure 2, à des fins de comparaison, on a représenté en traits mixtes ladite partie arrière conforme à la présente invention en superposition à ladite configuration connue. De façon symétrique et pour les mêmes fins de comparaison, sur la figure 3, on a représenté en traits mixtes ladite partie arrière connue en superposition à ladite configuration conforme à la présente invention.

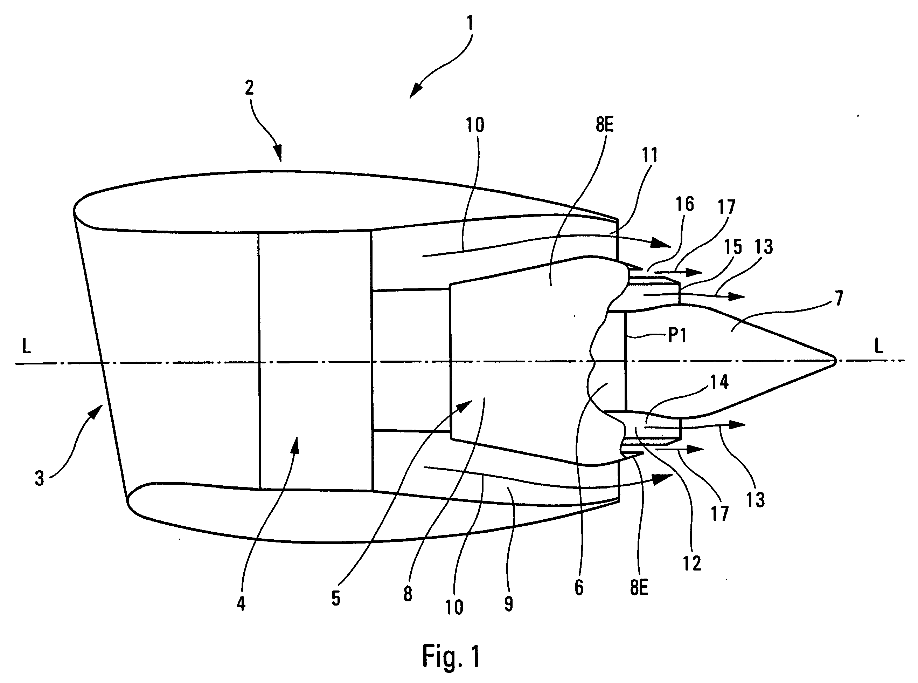

Le turbomoteur à double flux 1 d'axe L-L, représenté schématiquement et partiellement sur la figure 1 et destiné à propulser un aéronef (non représenté), comporte une nacelle 2 délimitant, à l'avant, une entrée d'air 3. La nacelle 2 contient axialement une soufflante de flux froid 4 et un générateur de flux chaud 5. Le générateur de flux chaud 5 est pourvu d'une turbine enfermée dans un carter 6 se terminant, à l'arrière, par un corps central 7 en forme de bulbe, et fixé audit carter 6 le long d'une surface de raccord ou plan de joint P1. Le générateur de flux chaud 5 est enfermé dans un capot 8 comportant une paroi externe 8E et une paroi interne 81 (voir la figure 2).

La paroi externe 8E du capot 8 délimite avec la nacelle 2 un canal 9 pour le flux froid, symbolisé par les flèches 10, ledit canal de flux froid 9 se terminant par une tuyère de flux froid 11. La paroi interne 81 délimite, avec le carter de turbine 6, un canal 12 pour le flux chaud, symbolisé par les flèches 13.

Le capot 8 du générateur de flux chaud 5 est prolongé vers l'arrière par une tuyère de flux chaud 14, coopérant avec ledit corps central 7 pour prolonger ledit canal 12 jusqu'à l'orifice annulaire 15 de sortie du flux chaud 13. La tuyère de flux chaud 14 est rendue solidaire de l'extrémité arrière de la paroi interne 81 le long d'une surface de raccord ou plan de joint P2 et, entre le bord arrière 8R de la paroi externe 8E et ladite tuyère 14 est ménagée une ouverture annulaire 16, disposée à l'extérieur par rapport à la tuyère de flux froid 11 et destinée à évacuer à l'extérieur un flux d'air de ventilation symbolisé par les flèches 17, prélevé sur le flux froid 10 et introduit dans le capot 8 du générateur de flux chaud 5 pour réguler la température de ce dernier.

Dans le mode de réalisation connu représenté en trait plein sur la figure 2, il est supposé que l'orifice annulaire 15 de sortie du flux chaud 13 forme de plus le col de la tuyère 14. En outre, cette dernière est constituée d'une paroi externe 14E sur laquelle s'écoule le flux froid 10 et d'une paroi interne 141 sur laquelle s'écoule le flux chaud 13.

En régime de croisière de l'aéronef portant le turbomoteur 1, le flux froid 10 est de type supersonique, alors que le flux chaud 13 est subsonique.

L'objet de la présente invention, illustré schématiquement par la figure 3, est principalement d'alléger la tuyère 14 du flux chaud et d'éviter les déformations de celle-ci dues à l'effet bilame entre lesdites parois 14E et 141, tout en ne nuisant pas aux performances dudit turbomoteur en vol de croisière de l'aéronef.

Pour cela, ladite tuyère 14 est constituée d'une peau unique 14s conformée pour favoriser l'écoulement du flux froid supersonique 10 lorsque l'aéronef est en vol de croisière. La forme de la peau unique 14s varie de façon continue le long de l'axe L-L et s'apparente à celle d'un bulbe s'élargissant depuis le plan de joint P2 jusqu'à venir en prolongement de la paroi externe 8E du capot moteur 8, en ménageant avec celui-ci une ouverture 16s comparable à l'ouverture 16.

Pour respecter, en ce qui concerne le flux chaud, la section nominale du col de tuyère et la section nominale de sortie -sections qui, dans l'exemple représenté, sont confondues avec l'orifice de sortie 15s de flux chaud- la forme du corps central 7 est modifiée comme représenté en 7s. Ainsi, à l'intérieur de la tuyère 14, le canal de flux chaud 12 prend la forme 12s.

La forme de la peau unique 14s doit être telle que, dans sa concavité tournée du côté du corps central, ne se produise aucun décollement dudit flux chaud 13.

Il peut se faire que, pour communiquer à la peau unique 14s sa forme optimale, on soit amené à déplacer l'ouverture de ventilation 16 en 16s, comme représenté sur la figure 3. La position 16s de ladite ouverture de ventilation est avantageusement au voisinage de la partie de plus grand diamètre de la peau unique 14s.

## Revendications

1. Turbomoteur (1) à double flux pour aéronef, pourvu d'un axe longitudinal (L-L) et comportant :
- une nacelle (2) délimitant, à l'avant, une entrée d'air (3) et contenant axialement une soufflante (4) de flux froid (10) et un générateur (5) de flux chaud (13) pourvu d'une turbine enfermée dans un carter (6) se terminant, à l'arrière, par un corps central (7) en forme de bulbe raccordé audit carter de turbine (6) le long d'une première surface de raccord (P1) ;
- un capot moteur (8) enfermant ledit générateur de flux chaud (5) et comportant :
▪ une paroi externe (8E) délimitant avec ladite nacelle (2) un canal de flux froid (9) se terminant, à l'arrière par une tuyère de flux froid (11), et
▪ une paroi interne (81) délimitant avec ledit carter de turbine (6) un canal de flux chaud (12),
- une tuyère de flux chaud (14) prolongeant ledit capot moteur (8) vers l'arrière en étant raccordée à celui-ci le long d'une seconde surface de raccord (P2) et coopérant avec ledit corps central (7) pour délimiter une section de col de tuyère et une section de sortie nominales pour ledit flux chaud (13), et
- au moins une ouverture de ventilation (16) disposée entre ladite paroi externe (8E) dudit capot moteur (8) et ladite tuyère de flux chaud (14), à l'extérieur par rapport à ladite tuyère de flux froid (11), et destinée à évacuer à l'extérieur un flux d'air de ventilation (17) prélevé sur ledit flux froid (10) et introduit dans ledit capot moteur (8) pour réguler la température dudit générateur de flux chaud (5),
**caractérisé en ce que** :
- ladite tuyère de flux chaud (14) est constituée d'une peau unique (14s) présentant la forme au moins approximative d'un bulbe s'élargissant depuis ladite seconde surface de raccord (P2) jusqu'à venir en prolongement de ladite paroi externe (8E) dudit capot moteur (8) ;
- ladite peau unique (14s) coopère avec ledit corps central (7) pour délimiter ladite section nominale de col de tuyère et ladite section de sortie nominale pour ledit flux chaud (13); et
- ladite ouverture de ventilation (16) est ménagée au voisinage de la partie de plus grand diamètre de ladite peau unique (14s).

2. Turbomoteur selon la revendication 1,
**caractérisé en ce que** ledit col de tuyère du flux chaud est confondu avec ladite sortie de flux chaud (15s).

3. Tuyère de flux chaud (14) pour un turbomoteur (1) à double flux pour aéronef, pourvu d'un axe longitudinal (L-L) et comportant :
- une nacelle (2) délimitant, à l'avant, une entrée d'air (3) et contenant axialement une soufflante (4) de flux froid (10) et un générateur (5) de flux chaud (13) pourvu d'une turbine enfermée dans un carter (6) se terminant, à l'arrière, par un corps central (7) en forme de bulbe raccordé audit carter de turbine (6) le long d'une première surface de raccord (P1) ;
- un capot moteur (8) enfermant ledit générateur de flux chaud (5) et comportant :
▪ une paroi externe (8E) délimitant avec ladite nacelle (2) un canal de flux froid (9) se terminant, à l'arrière, par une tuyère de flux froid (11), et
▪ une paroi interne (81) délimitant avec ledit carter de turbine (6) un canal de flux chaud (12),
- ladite tuyère de flux chaud (14) prolongeant ledit capot moteur (8) vers l'arrière en étant raccordée à celui-ci le long d'une seconde surface de raccord (P2) et coopérant avec ledit corps central (7) pour délimiter une section de col de tuyère et une section de sortie nominales pour ledit flux chaud (13) ; et
- au moins une ouverture de ventilation (16) disposée entre ladite paroi externe (8E) dudit capot moteur (8) et ladite tuyère de flux chaud (14), à l'extérieur par rapport à ladite tuyère de flux froid (11), et destinée à évacuer à l'extérieur un flux d'air de ventilation (17) prélevé sur ledit flux froid (10) et introduit dans ledit capot moteur (8) pour réguler la température dudit générateur de flux chaud (5),
**caractérisé en ce que** :
- ladite tuyère de flux chaud (14) est constituée d'une peau unique (14s) présentant la forme au moins approximative d'un bulbe s'élargissant depuis ladite seconde surface de raccord (P2) jusqu'à venir en prolongement de ladite paroi externe (8E) dudit capot moteur (8) ;
- ladite peau unique (14s) coopère avec ledit corps central (7) pour délimiter ladite section nominale de col de tuyère et ladite section de sortie nominale pour ledit flux chaud (13) ; et
- ladite ouverture de ventilation (16) est ménagée au voisinage de la partie de plus grand diamètre de ladite peau unique (14s).

## Patentansprüche

1. Doppelstromtriebwerk (1) für ein Luftfahrzeug, das mit einer Längsachse (L-L) versehen ist und Folgendes aufweist:
- eine Gondel (2), die an der Vorderseite einen Lufteinlass (3) begrenzt und axial ein Gebläse (4) eines Kaltstroms (10) und einen Generator (5) eines Warmstroms (13) aufweist, der mit einer Turbine versehen ist, die in einem Gehäuse (6) eingeschlossen ist, das auf der Rückseite in einen zwiebelförmigen zentralen Körper (7) ausläuft, der mit dem Turbinengehäuse (6) entlang einer ersten Verbindungsfläche (P1) verbunden ist;
- eine Motorhaube (8), die den Generator des Warmstroms (5) einschließt und Folgendes aufweist:
• eine Außenwand (8E), die mit der Gondel (2) einen Kaltstromkanal (9) begrenzt, der an der Rückseite in eine Düse des Kaltstroms (11) ausläuft, und
• eine Innenwand (8I), die mit dem Turbinengehäuse (6) einen Warmstromkanal (12) begrenzt,
- eine Düse des Warmstroms (14), die die Motorhaube (8) nach hinten verlängert, indem sie mit dieser entlang einer zweiten Verbindungsfläche (P2) verbunden ist und mit dem zentralen Körper (7) zusammenwirkt, um einen nominalen Düsenhalsabschnitt und einen nominalen Ausgangsabschnitt für den Warmstrom (13) zu begrenzen, und
- mindestens eine Lüftungsöffnung (16), die zwischen der Außenwand (8E) der Motorhaube (8) und der Düse des Warmstroms (14) auf der Außenseite gegenüber der Düse des Kaltstroms (11) angeordnet ist und dazu bestimmt ist, einen Ventilationsluftstrom (17) nach außen abzuführen, der von dem Kaltstrom (10) entnommen und in die Motorhaube (8) eingeführt ist, um die Temperatur des Generators des Warmstroms (5) zu regulieren,
**dadurch gekennzeichnet, dass**:
- die Düse des Warmstroms (14) aus einer einzigen Schale (14s) gebildet ist, die mindestens annähernd die Form einer Zwiebel aufweist, die sich von der zweiten Verbindungsfläche (P2) erweitert, bis sie in Verlängerung der Außenwand (8E) der Motorhaube (8) kommt;
- die einzigen Schale (14s) mit dem zentralen Körper (7) zusammenwirkt, um den nominalen Düsenhalsabschnitt und den nominalen Ausgangsabschnitt für den Warmstrom (13) zu begrenzen, und
- die Lüftungsöffnung (16) in der Nähe des Teils des größten Durchmessers der einzigen Schale (14s) angeordnet ist.

2. Triebwerk nach Anspruch 1, **dadurch gekennzeichnet, dass** der Düsenhals des Warmstroms mit dem Warmstromauslass (15s) zusammenfällt.

3. Düse eines Warmstroms (14) für ein Doppelstromtriebwerk (1) für ein Luftfahrzeug, das mit einer Längsachse (L-L) versehen ist und Folgendes aufweist:
- eine Gondel (2), die an der Vorderseite einen Lufteinlass (3) begrenzt und axial ein Gebläse (4) eines Kaltstroms (10) und einen Generator (5) eines Warmstroms (13) aufweist, der mit einer Turbine versehen ist, die in einem Gehäuse (6) eingeschlossen ist, das auf der Rückseite in einen zwiebelförmigen zentralen Körper (7) ausläuft, der mit dem Turbinengehäuse (6) entlang einer ersten Verbindungsfläche (P1) verbunden ist;
- eine Motorhaube (8), die den Generator des Warmstroms (5) einschließt und Folgendes aufweist:
• eine Außenwand (8E), die mit der Gondel (2) einen Kaltstromkanal (9) begrenzt, der an der Rückseite in eine Düse des Kaltstroms (11) ausläuft, und
• eine Innenwand (8I), die mit dem Turbinengehäuse (6) einen Warmstromkanal (12) begrenzt,
- die Düse des Warmstroms (14), die die Motorhaube (8) nach hinten verlängert, indem sie mit dieser entlang einer zweiten Verbindungsfläche (P2) verbunden ist und mit dem zentralen Körper (7) zusammenwirkt, um einen nominalen Düsenhalsabschnitt und einen nominalen Ausgangsabschnitt für den Warmstrom (13) zu begrenzen; und
- mindestens eine Lüftungsöffnung (16), die zwischen der Außenwand (8E) der Motorhaube (8) und der Düse des Warmstroms (14) auf der Außenseite gegenüber der Düse des Kaltstroms (11) angeordnet ist und dazu bestimmt ist, einen Ventilationsluftstrom (17) nach außen abzuführen, der von dem Kaltstrom (10) entnommen und in die Motorhaube (8) eingeführt ist, um die Temperatur des Generators des Warmstroms (5) zu regulieren,
**dadurch gekennzeichnet, dass**:
- die Düse des Warmstroms (14) aus einer einzigen Schale (14s) gebildet ist, die mindestens annähernd die Form einer Zwiebel aufweist, die sich von der zweiten Verbindungsfläche (P2) erweitert, bis sie in Verlängerung der Außenwand (8E) der Motorhaube (8) kommt;
- die einzigen Schale (14s) mit dem zentralen Körper (7) zusammenwirkt, um den nominalen Düsenhalsabschnitt und den nominalen Ausgangsabschnitt für den Warmstrom (13) zu begrenzen; und
- die Lüftungsöffnung (16) in der Nähe des Teils des größten Durchmessers der einzigen Schale (14s) angeordnet ist.

## Claims

1. A bypass turbojet engine (1) for an aircraft, provided with a longitudinal axis (L-L) and comprising:
- a nacelle (2) delimiting, at the front, an air intake (3) and axially containing a cold flow (10) fan (4) and a hot flow (13) generator (5) provided with a turbine enclosed in a casing (6) ending, at the rear, in a bulbous boss (7) connected to said turbine casing (6) along a first connecting surface (P1);
- an engine cowl (8) containing said hot flow generator (5) and comprising:
. an external wall (8E) delimiting with said nacelle (2) a cold flow duct (9) ending, at the rear, in a cold flow nozzle (11), and
. an internal wall (81) delimiting with said turbine casing (6) a hot flow duct (12),
- a hot flow nozzle (14) extending said engine cowl (8) rearward by being connected thereto along a second connecting surface (P2) and collaborating with said boss (7) to delimit a nominal nozzle throat section and a nominal outlet section for said hot flow (13), and
- at least one ventilation opening (16) positioned between said external wall (8E) of said engine cowl (8) and said hot flow nozzle (14), on the outside with respect to said cold flow nozzle (11), and intended to discharge to the outside a ventilation air flow (17) bled from said cold flow (10) and introduced into said engine cowl (8) in order to regulate the temperature of said hot flow generator (5),
**characterized in that**:
- said hot flow nozzle (14) consists of a single skin (14s) being at least approximately bulbous in shape, widening from said second connecting surface (P2) into the continuation of said external wall (8E) of said engine cowl (8);
- said single skin (14s) collaborates with said boss (7) to delimit said nominal nozzle throat section and said nominal outlet section for said hot flow (13); and
- said ventilation opening (16) is created in the vicinity of the largest-diameter part of said single skin (14s).

2. The turbojet engine as claimed in claim 1, **characterized in that** said hot flow nozzle throat coincides with said hot flow outlet (15s).

3. A hot flow nozzle (14) for a bypass turbojet engine (1) for an aircraft, provided with a longitudinal axis (L-L) and comprising:
- a nacelle (2) delimiting, at the front, an air intake (3) and axially containing a cold flow (10) fan (4) and a hot flow (13) generator (5) provided with a turbine enclosed in a casing (6) ending, at the rear, in a bulbous boss (7) connected to said turbine casing (6) along a first connecting surface (P1);
- an engine cowl (8) containing said hot flow generator (5) and comprising:
. an external wall (8E) delimiting with said nacelle (2) a cold flow duct (9) ending, at the rear, in a cold flow nozzle (11), and
. an internal wall (81) delimiting with said turbine casing (6) a hot flow duct (12),
- said hot flow nozzle (14) extending said engine cowl (8) rearward by being connected thereto along a second connecting surface (P2) and collaborating with said boss (7) to delimit a nominal nozzle throat section and a nominal outlet section for said hot flow (13), and
- at least one ventilation opening (16) positioned between said external wall (8E) of said engine cowl (8) and said hot flow nozzle (14), on the outside with respect to said cold flow nozzle (11), and intended to discharge to the outside a ventilation air flow (17) bled from said cold flow (10) and introduced into said engine cowl (8) in order to regulate the temperature of said hot flow generator (5),
**characterized in that**:
- said hot flow nozzle (14) consists of a single skin (14s) being at least approximately bulbous in shape, widening from said second connecting surface (P2) into the continuation of said external wall (8E) of said engine cowl (8);
- said single skin (14s) collaborates with said boss (7) to delimit said nominal nozzle throat section and said nominal outlet section for said hot flow (13); and
- said ventilation opening (16) is created in the vicinity of the largest-diameter part of said single skin (14s).
